# EUROPÄISCHE PATENTANMELDUNG

(11) **EP 1 515 509 A2**
(43) Veröffentlichungstag der Anmeldung: **16.03.2005**
(21) Anmeldenummer: 04009808.9
(22) Anmeldetag: 26.04.2004
(51) Int. Cl.: H04L 29/06, G06F 17/60

(54) **Verfahren und Vorrichtung zum Bereitstellen einer Infrastruktur zum Durchführen von spontanen "any to any"-Datenübertragungen**

(30) Priorität: 02.09.2003 DE 10340787
(71) Anmelder: Deutsche Telekom AG, 53113 Bonn (DE)
(72) Erfinder: Philipeit, Rudolf, 91522 Ansbach (DE)

(57) **Zusammenfassung**

Die Erfindung betrifft das Bereitstellen einer Infrastruktur zum Durchführen von spontanen Any-to-Any-Datenübertragungen zwischen wenigstens zwei digitalen Kommunikationssystemen. Eine Aufgabe der Erfindung besteht darin, einen konstruktiven Weg für eine digitale Vernetzung aufzuzeigen, mit welcher eine spontane "Any-to-Any"-Nutzung von digitalen Daten auch für eine Maschine-zu-Maschine-Kommunikation gewährleistbar ist.

Die Erfindung schlägt vor, systemübergreifende Vernetzungskomponenten innerhalb einer serverunabhängig zusammenwirkenden, digitalen Formularinfrastruktur zu integrieren. Eine digitale Datei wird als Infrastrukturfomular (10) eingesetzt, als Datenaustauschformat für das Infrastrukturformular (10) wird eine XML-basierte Auszeichnungssprache verwendet und zur Sicherung des Infrastrukturformulars wird dieses mit wenigstens einer digitalen Signatur (5, 8) versehen, wobei unter Ansprechen auf das Infrastrukturformular (10) und/oder auf die digitale Signatur (5, 8) das senderseitige Kommunikationssystem (201) zum Zugreifen auf wenigstens einen spezifisch zugeordneten Verzeichnisdienst berechtigt wird oder unter Ansprechen auf das Infrastrukturformular (10) und/oder einen ausgewählten Verzeichnisdienst das Versehen des zu übertragenden Infrastrukturformulars mit einer spezifisch zugeordneten digitale Signatur (5, 8) angefordert wird.

## Beschreibung

Die Erfindung betrifft ein Verfahren zum Bereitstellen einer Infrastruktur zum Durchführen von spontanen Any-to-Any-Datenübertragungen zwischen wenigstens zwei digitalen Kommunikationssystemen sowie ein insbesondere zum Durchführen des Verfahrens angepasstes Kommunikationssystem und einen computerlesbaren Träger mit zur Durchführung des Verfahrens auslesbaren Daten.

Heutzutage wird zwar Information nicht mehr in jedem Fall auf Papier abgelegt sondern in zunehmenden Maße auch in digitaler Form auf Rechnersystemen und Netzwerken verwaltet, wobei sich jedoch darüber hinaus nichts Grundsätzliches verändert hat. Insbesondere wird für alle Geschäftsprozesse nach wie vor im Wesentlichen das unterschriebene Papier für die rechtssichere Dokumentation zwischen natürlichen und juristischen Personen verwendet. Ferner sitzt an jeder entscheidungsrelevanten Stelle ein Mensch, welcher mit seinem Fachwissen aber auch seinem "gesunden Menschenverstand" ein vorliegendes Dokument bewertet und die Inhalte für eine weitere Verarbeitung freigibt. Im Wesentlichen alle heute stattfindenden technologischen Verbesserungen legen dieses Prinzip zugrunde.

Zwar wird beispielsweise mit einem Dokumentenmanagementsystem der Zugriff auf das Papierdokument für Menschen optimiert, mit einem E-Mail System der Transport von digitalen Dokumenten für Menschen beschleunigt, oder mit einem Content-Management-System die Aufbereitung von Informationen für Menschen optimiert, aber im Gegensatz zur allgemein gültigen Vernetzung in der physikalischen Dimension basierend auf den dafür erforderlichen Vernetzungskomponenten wie Transportweg, Transportmittel, Sicherung und Zielfindung erfährt für die logische Dimension der digital vernetzten Gesellschaft lediglich der Transportweg, beispielsweise über das Internet Allgemeingültigkeit, wohingegen noch für die Vernetzungskomponenten Transportmittel, Sicherung und Zielfindung diese Allgemeingültigkeit fehlt.

So sind insbesondere Datenformate als Transportmittel noch nicht allgemein gültig definiert, zur Sicherung eingesetzte "Public-Key-Infrastrukturen" (PKI) sind anwendungsspezifisch und/oder serverzentralistisch ausgelegt, so dass die jeweilige Zielfindung, insbesondere basierend auf sogenannten Verzeichnisdiensten jeweils abhängig von der eingesetzten "Public-Key-Infrastruktur" ist.

Mit anderen Worten, erst wenn eine allgemein gültige Infrastruktur für eine Informationsgesellschaft zur Verfügung steht, in welcher quasi "Informations-Maschinen" für allgemeine Aufgaben, wie beispielsweise Rechnungen bezahlen, Einkommenssteuerausgleich durchführen und/oder Wohngeld beantragen, einfach an miteinander vernetzte Kommunikationssysteme anschaltbar sind und diese dann die Arbeit tun, ist der wirkliche Wandel zur Informationsgesellschaft vollzogen. Bei einem Vergleich mit der Industrialisierung stehen uns zwar mit dem Internet Antriebe (WEB-Server) und im Wesentlichen unendlich lange Übertragungswege zu Verbrauchern (Browsern) zur Verfügung, sämtliche weiteren Entwicklungen der Industriegesellschaft, welche hierfür erst den wirklichen Durchbruch bedeutet haben, wie beispielsweise Elektrifizierung und Automatisierung fehlen in der Informationsgesellschaft noch gänzlich. Diese können mit der logischen Dimension der digital vernetzten Gesellschaft umschrieben werden, welche in der nachfolgenden Beschreibung entsprechend angewendet ist.

Eine Aufgabe der Erfindung besteht somit darin, einen konstruktiven Weg für eine digitale Vernetzung, insbesondere auf der logischen Ebene, aufzuzeigen, mit welcher eine spontane "Any-to-Any"-Nutzung von digitalen Daten, insbesondere auch für eine Maschine-zu-Maschine-Kommunikation, auf einfach Art gewährleistbar ist.

Die erfindungsgemäße Lösung der Aufgabe ist auf höchst überraschende Weise durch einen jeweiligen Gegenstand mit den Merkmalen eines der anhängigen unabhängigen Ansprüche gegeben. Vorteilhafte und/oder bevorzugte Ausführungsformen und Weiterbildungen sind Gegenstand der jeweiligen abhängigen Ansprüche.

Erfindungsgemäß ist somit ein erfindungsgemäßes Verfahren vorgesehen, bei welchem zum Bereitstellen einer Infrastruktur zum Durchführen von spontanen "Any-to-Any"-Datenübertragungen zwischen wenigstens zwei digitalen Kommunikationssystemen systemübergreifende Vernetzungskomponenten in einer serverunabhängig zusammenwirkenden, digitalen Formularinfrastruktur integriert werden. Durch Einsetzen innerhalb der Formularinfrastruktur einer digitalen Datei als Infrastrukturformular unter Verwendung wenigstens einer XMLbasierten Auszeichnungssprache als Datenaustauschformat für das Infrastrukturformular und unter Sicherung des Infrastrukturformulars durch das Versehen des Infrastrukturformulars mit wenigstens einer digitalen Signatur unter Verwendung eines senderseitigen Kommunikationssystems vor der Übertragung an wenigstens ein Empfangs-Kommunikationssystem, wobei unter Ansprechen auf das Infrästrukturformular und/oder auf die digitale Signatur das senderseitige Kommunikationssystem zum Zugreifen auf wenigstens einen spezifisch zugeordneten Verzeichnisdienst berechtigt wird oder unter Ansprechen auf das Infrastrukturformular und/oder einen ausgewählten Verzeichnisdienst zum Versehen des zu übertragenden Infrastrukturformulars mit einer spezifisch zugeordneten digitalen Signatur aufgefordert wird, ist folglich erstmalig eine Bündelung von Transportweg, Transportmittel, Sicherung und Zielfindung innerhalb einer gemeinsamen elektronischen Formularinfrastruktur und somit eine gleichzeitige Bedienung von allen erforderlichen Vernetzungskomponenten gewährleistet, die losgelöst von jedem Server für im Wesentlichen jegliche "Peer-to-Peer"-Kommunikationsbeziehung, von Mensch-zu-Mensch, von Maschine-zu-Mensch, Mensch-zu-Maschine und von Maschine-zu-Maschine einsetzbar ist.

In bevorzugter Ausführung ist vorgesehen, als digitale Datei für das Infrastrukturformular ein portables Dokumentenformat, insbesondere eine PDF (Portable Document Format)-Datei zu verwenden, da hierdurch Plattform-/anwendungsunabhängig das Layout jedes Ausgangsdokuments beibehalten wird, wobei durch die verwendeten Seitenbeschreibungssprachen eine Trennung von Inhalt und Form derart erfolgt, dass das Dokument auch maschinenlesbar ist und zusätzlich insbesondere Zugriffsrechte vergebbar sind sowie digitale Signaturen und Metadaten in einem XML-Format einbindbar sind. Ferner hat sich PDF insbesondere auf der Präsentationsebene bereits als im Wesentlichen rechtssichere und für einen Benutzer kostengünstige Plattform etabliert.

In vorteilhafter Weise sind jedoch auch andere und/oder entsprechende Weiterentwicklungen in Bezug auf portable elektronische Dokumentenformate einsetzbar. Als Beispiel sei auf das von der Firma Adobe Systems weiterentwickelte XDF (XML Data Package) hingewiesen, als welches elektronische Formulare, insbesondere zur effizienten Unterstützung von Dokumenten-Workflows interner und externer Anwendungen, in Form von XML-Dateien, die Formulardaten, Mustervorlagen und andere XML Informationen sowie PDF-Dokumente enthalten, erzeugbar, ausgebbar und weiterverarbeitbar sind.

In weiterer bevorzugter Ausführung ist ferner vorgesehen, dass in dem Infrastrukturformular ein Grunddatenbereich zum XML-spezifischen Einbetten und Auslesen von eingebbaren anwenderbezogenen Grunddaten und ein Inhaltsdatenbereich zum XML-spezifischen Einbetten und Auslesen von eingebbaren anwendungsbezogenen Inhaltsdaten definiert wird.

In Weiterführung ist ferner von Vorteil, dass das Anwenden einer spezifischen XML-Auszeichnungssprache, wie z.B. XMELD, XBAU, XJUSTIZ und/oder weiteren bereits standardisierten oder auch zukünftigen XML-Auszeichnungssprachen, zum Einbetten und/oder Auslesen unter Ansprechen auf das Infrastrukturformular und/oder unter Ansprechen auf wenigstens ein beteiligtes Kommunikationssystem vorgegeben und/oder unter Ansprechen auf wenigstens ein beteiligtes Kommunikationssystem vorgegeben und/oder bewirkt wird.

Anwendungsbedingt ist in bevorzugter Weiterbildung ferner vorgesehen, dass die Grunddaten anwenderbedingt eingegeben und/oder aus einer Datenbank eines beteiligten Kommunikationssystems, eines Verzeichnisdienstes und/oder eines im Internet bereitgestellten personifizierten digitalen Schließfaches übernommen werden.

In weiterer zweckmäßiger Ausführungsform ist ferner vorgesehen, dass unter Ansprechen auf das Auslesen von Grundund/oder Inhaltsdaten durch das wenigstens eine Empfangs-Kommunikationssystem ein Datenaustausch und/oder -abgleich mit einem weiteren Kommunikationssystem eingeleitet und/oder durchgeführt wird. Hierdurch wird insbesondere eine harmonische Integration und Einbindung von Anwendungen im Wechselspiel zwischen Prozessen und Applikationen über mehrere Kommunikationssysteme hinweg, die beispielsweise verschiedenen Verwaltungsbehörden zugeordnet sind, ermöglicht.

In weiterer anwendungsspezifisch vorteilhafter Ausführungsform wird anwenderbedingt und/oder unter Ansprechen auf das Auslesen von Grund- und/oder Inhaltsdaten durch das wenigstens eine Empfangs-Kommunikationssystem zwischen dem wenigsten einen Empfangs-Kommunikationssystem und dem senderseitigen Kommunikationssystem eine Kommunikationsverbindung aufgebaut, mit welcher insbesondere eine geführte Bearbeitung und/oder Ausfüllhilfe eines bestimmten Infrastrukturformulars gewährleistbar ist.

Für die praktische Umsetzung ist ferner bevorzugt vorgesehen, dass die Empfangsadresse des wenigstens einen ausgewählten Empfangs-Kommunikationssystems durch das Infrastrukturformular bereits vorgegeben bzw. vorgelegt wird oder nach Zugreifen auf einen Verzeichnisdienst aus diesem ausgewählt wird.

Zweckmäßiger Weise kann das elektronische Signieren eines Infrastrukturformulars im Wesentlichen mit Hilfe eines beliebigen kryptographischen Verfahrens durchgeführt werden, wobei jedoch ein Public-Key-Verfahren bevorzugt ist. Gemäß einer bevorzugten Ausführungsform der Erfindung wird hierzu von dem zu übertragenden Infrastrukturformular mittels einer Computereinrichtung zunächst ein elektronischer Fingerabdruck, beispielsweise gemäß einer an sich bekannten Hash-Funktion erstellt, der in diesem Fall somit einen bestimmten Hash-Wert zum Signieren mit einem geheimen privaten Schlüssel darstellt. Ein öffentlicher, dem geheimen Schlüssel zugeordneter Schlüssel ist in der Computereinrichtung gespeichert und/oder dem Infrastrukturformular vor der Nutzung durch das senderseitige Kommunikationssystem beigefügt, der mittels der Computereinrichtung abgerufen oder ausgelesen wird, um den signierten elektronischen Fingerabdruck wieder in einen unverschlüsselten elektronischen Fingerabdruck umzuwandeln und diesen mit dem aus den zu signierenden Infrastrukturformular erstellten elektronischen Fingerabdruck dahingehend zu vergleichen, ob eine Manipulation stattgefunden hat.

Insbesondere, um die Flexibilität der Anwendung des erfindungsgemäßen Verfahrens auf Seiten des Benutzers weiter zu erhöhen und beispielsweise auch die Anwendung von einem im Wesentlichen beliebigen senderseitigen Kommunikationssystem, welches dem individuellen Anwender nicht dauerhaft zugeordnet ist, zu ermöglichen, sieht die Erfindung ferner vor, dass mittels der Computereinrichtung des senderseitigen Kommunikationssystems der von dem zu übertragenden Infrastrukturformular erstellte elektronische Fingerabdruck über wenigstens ein Kommunikationsnetz zum Signieren zu einer ausgewählten Kommunikationseinrichtung übertragen wird, insbesondere einer mobilen Kommunikationsendeinrichtung, innerhalb welcher, insbesondere auf einer in der Kommunikationsendeinrichtung eingesetzten SIM-Karte, ein geheimer, privater Schlüssel abgespeichert ist. Der signierte Fingerabdruck wird anschließend an die Computereinrichtung zurück übertragen, welche den empfangenen signierten elektronische Fingerabdruck mittels dem durch die Computereinrichtung abrufbaren oder auslesbaren, dem geheimen Schlüssel zuordenbaren öffentlichen Schlüssel in einen unverschlüsselten elektronischen Fingerabdruck umwandelt und mit dem erstellten elektronischen Fingerabdruck vergleicht. Bei Übereinstimmung wird das zu übertragende Infrastrukturformular mit dem signierten elektronischen Fingerabdruck vor dem Übertragen an das wenigstens eine ausgewählte Empfangs-Kommunikationssystem versehen.

Bei Anwendung eines Public-Key-Verfahrens zur digitalen Signatur eines zu übertragenden Infrastrukturformulars ist ferner vorgesehen, dass das ausgewählte Empfangs-Kommunikationssystem auf einen dem geheimen Schlüssel zugeordneten öffentlichen Schlüssel zugreifen kann.

In besonders vorteilhafter Weiterbildung verwendet das Verfahren ferner zur Durchführung von Transformationen von in das Infrastrukturformular eingebetteten Modulen zwischen verschiedenen Kommunikationssystemen das an sich bekannte Kommunikationsprotokoll SOAP innerhalb der Formularinfrastruktur. Hierdurch wird beispielsweise der Zugang zu einzelnen Objekten im Internet ermöglicht, wobei einzelne proprietäre Module verpackt und mit allgemein verständlichen Schnittstellen versehen werden können und somit ein Nachrichtenaustausch definierbar ist zwischen einem Programmobjekt, welches Dienste nachfragt und einem Programmobjekt, welches Dienste anbietet. Da in den technischen Spezifikationen SOAP (Simple Object Access Protocol) den kleinsten gemeinsamen Nenner bestehender Systeme darstellt, können im Wesentlichen alle Kommunikationssysteme unter Verwendung des herstellerneutralen und von der jeweils verwendeten Programmiersprache völlig unabhängigen Kommunikationsprotokoll untereinander kommunizieren.

Das erfindungsgemäße Verfahren eignet folglich insbesondere zur Verwendung für eGovernment-Prozesse und/oder -Applikationen, da unterschiedlichste spezifische Prozesse mit heterogenen Systemen und Vernetzungsstrukturen vernetzt werden können.

Insbesondere zum Durchführen des erfindungsgemäßen Verfahrens sieht die Erfindung ferner ein Kommunikationssystem vor, welches wenigstens eine zur Nutzung wenigstens eines Kommunikationsnetzes an dieses anschaltbare Computereinrichtung und Kommunikationsendeinrichtung umfasst. Die Computereinrichtung weist eine Einrichtung zum Erstellen eines elektronischen Fingerabdrucks aus einer Datei auf und die Kommunikationsendeinrichtung eine Signiervorrichtung zum Signieren eines elektronischen Fingerabdrucks und/oder eine Entschlüsselungsvorrichtung zum Entschlüsseln und Prüfen eines signierten elektronischen Fingerabdrucks. Das Kommunikationssystem umfasst zweckmäßiger Weise ferner Schnittstelleneinrichtungen zum Erzeugen, Bearbeiten und/oder Lesen eines Infrästrukturformulars,-welches auf einem portablen, mit einer digitalen Signatur versehenen Dokumentenformats basiert und für eingebettete und/oder einzubettende Daten eine XML-basierte Auszeichnungssprache als Datenaustauschformat umfasst. Darüber hinaus weist das Kommunikationssystem Schnittstelleneinrichtungen auf, die unter Ansprechen auf in dem Infrastrukturformular eingebettete Daten und/oder auf eine digitale Signatur das Zugreifen, insbesondere über das Kommunikationsnetz, auf spezifische zugeordnete Verzeichnisdienste und/oder unter Ansprechen auf in dem Infrastrukturformular eingebettete Daten und/oder auf einen ausgewählten Verzeichnisdienst die Verwendung einer bestimmten digitalen Signatur anfordern.

Erfindungsgemäße Ausführungsformen umfassen ein Kommunikationssystem, bei welchem die Computereinrichtung und die Kommunikationsendeinrichtung eine gemeinsame Einheit ausbilden oder separate über wenigstens ein Kommunikationsnetz miteinander kommunizierfähige Einheiten ausbilden.

Entsprechend den bevorzugten Ausführungsformen des erfindungsgemäßen Verfahrens ist die Kommunikationsendeinrichtung bevorzugt eine mobile, insbesondere ein Mobiltelefon, in welche, insbesondere auf einer der Kommunikationsendeinrichtung zuordenbaren SIM-Karte, wenigstens ein geheimer privater Schlüssel gespeichert ist.

In Praktischer Ausführung weist die Computereinrichtung ferner eine Einrichtung zum Auslesen und Verifizieren eines mit dem Infrastrukturformular bereitgestellten öffentlichen Schlüssels auf.

Zur vollständigen Nutzung des erfindungsgemäßen Verfahrens umfasst wenigstens die Computereinrichtung Schnittstellen zur Nutzung des Internets, sowie eine Vorrichtung, die anwenderbedingt und/oder unter Ansprechen auf das Auslesen von in dem Infrastrukturformular eingebetteten Daten eine Kommunikationsverbindung zu einem weiteren Kommunikationssystem, einem Verzeichnisdienst und/oder zu einem im Internet bereitgestellten personifizierten digitalen Schließfach für einen Datenaustausch und/oder -abgleich mit einer entsprechend spezifizierbaren Datenbank aufbaut.

Insbesondere zur einfachen Software-basierten Implementierung der Erfindung umfasst diese ferner einen computerlesbaren Träger mit auslesbaren Daten, die, wenn durch einen Computer ausgelesen, zur Durchführung des erfindungsgemäßen Verfahrens, insbesondere zur Nutzung auf einem vorstehend beschriebenen Kommunikationssystem, ein Infrastrukturformular bereitstellen und/oder eine erfindungsgemäße Formularinfrastruktur bewirken.

Weitere Vorteile und Merkmale der Erfindung werden anhand der nachfolgend beispielhaft näher beschriebenen bevorzugten Ausführungsformen unter Bezugnahme auf die beigefügten Zeichnungen ersichtlich.

In den Zeichnungen zeigen:
- Fig. 1: eine schematische allgemeine Darstellung betreffend die erfindungsgemäße Erschließung und Integration bisher fehlender Infrastrukturkomponenten innerhalb einer gemeinsamen elektronischen Formularinfrastruktur zur Gewährleistung einer "Peer-to-Peer"-basierten digitalen Datenkommunikation zum Durchführen eines im Wesentlichen beliebigen spontanen "Any-to-Any"-Informationsaustauschs zwischen wenigstens zwei digitalen Kommunikationssystemen,
- Fig. 2: eine stark vereinfachte Prinzipskizze einer serverunabhängig zusammenwirkenden erfindungsgemäßen digitalen Formularinfrastruktur,
- Fig. 3: ein stark schematisiertes erfindungsgemäßes Szenario zum Signieren eines erfindungsgemäßen Infrastrukturformulars und
- Fig. 4: eine stark vereinfachte Integrationsskizze zur Veranschaulichung der Integration einer "Eingabe-Anwendung-Ausgabe" im Wechselspiel zwischen verschiedenen eGovernment-Prozessen und -Applikationen auch über mehrere Verwaltungsebenen hinweg.

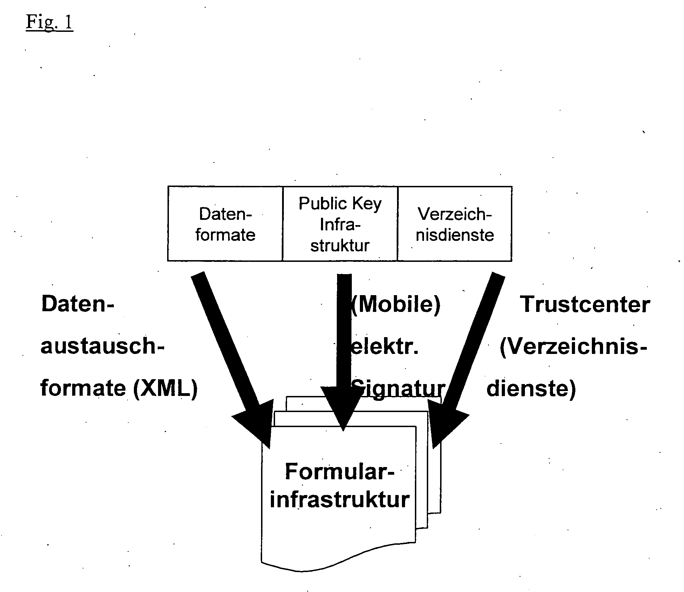

Unter Bezugnahme zunächst auf Fig. 1 integriert die erfindungsgemäße Peer-to-Peer-Formularinfrastruktur definierte XML (Extendable Markup Language)-Datenaustauscheformate, eine Public-Key-Infrastruktur zum elektronischen, insbesondere zum mobilen elektronischen Signieren, und Verzeichnisdienste, insbesondere basierend auf Trust-Center, so dass allgemein gültige Verbindungen zwischen Einzelanwendungen und/oder Prozessen mit heterogenen Systemen und/oder Vernetzungsstrukturen insbesondere auch für eine spontane "Any-to-Any"-Nutzung gewährleistet sind.

Ferner ist für eine allgemeingültige Nutzung des Internets als. Transportweg aber auch anderer Datenträger, wie Disketten, CD-Roms und/oder USB-Sticks, das zum Informationsaustausch verwendete Formular innerhalb der Formularinfrastruktur zweckmäßiger Weise als Datei ausgeführt, wobei bevorzugt das offene und als rechtssichere Plattform eines Datentransportes bereits etablierte Dokumentenformat PDF (Portable Document Format) eingesetzt wird.

In erfindungsgemäßer Verbindung mit den als "Transportmittel" eingesetzten XML-Auszeichnungssprachen zur allgemeingültigen Beschreibung hierarchisch strukturierter Daten und zum getrennten Darstellen von Inhalten und deren Präsentationen sowie aktuellen Standard-Signaturmöglichkeiten, gegebenenfalls um die qualifizierte elektronische Signatur ergänzt, zur Sicherung eines zu übertragenden Infrastrukturformulars, insbesondere hinsichtlich dessen Authentizität, Identität und Integrität, und beispielsweise in Abhängigkeit eines bereits durch das Infrastrukturformular vorgelegten Empfängerkreis-Versandzieles oder Auswahlmenüs zu einem zugehörigen Verzeichnisdienst zur Zielfindung ist die Formularinfrastruktur losgelöst von jedem Server für im Wesentlichen jegliche digitale Peer-to-Peer-Kommunikationsbeziehung, also von Mensch-zu-Mensch, von Mensch-zu-Maschine, von Maschine-zu-Mensch und von Maschine-zu-Maschine einsetzbar.

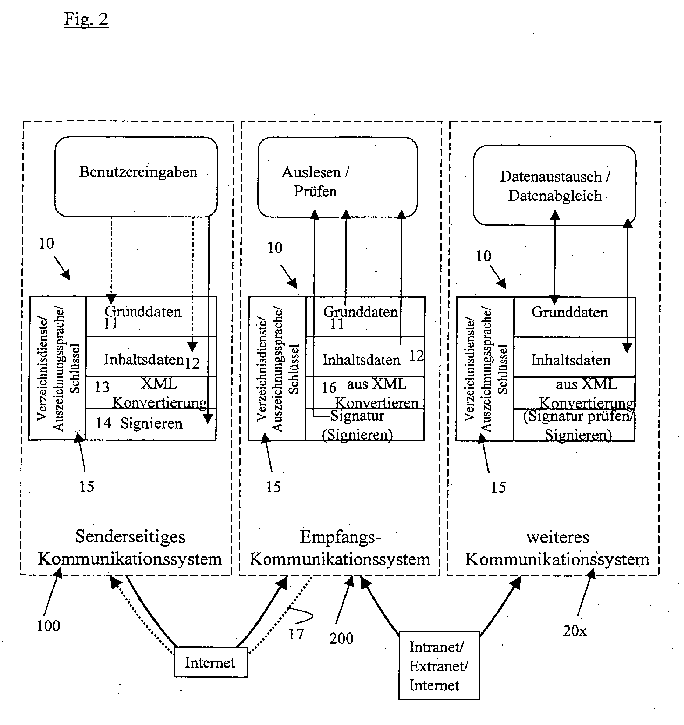

Die Struktur des Formulars 10, wie bei Fig. 2 stark vereinfacht und schematisiert zu sehen, umfasst zweckmäßigerweise einen allgemeinen, Grunddaten 11 umfassenden Teil und einen spezifischen, Inhaltsdaten 12 umfassenden Teil. Die Grunddaten 11 umfassen hierbei insbesondere Angaben über den Absender und/oder über den Empfänger. Je nach spezifischer Anwendung können diese Daten durch den Benutzer selbst eingegeben werden oder sie sind zumindest teilweise bereits im Infrastrukturformular 10 vorbelegt. Das Infrastrukturformular 10 weist zweckmäßiger Weise ferner bereits eingebettete Vorgaben- und/oder Basiseinstellungen 15 auf, basierend auf welchen die Struktur eines im Infrastrukturformular "hinterlegten" .Datenaustaustauschformats für die Grunddaten 11, beispielsweise gemäß dem Standard XMELD, als spezifische XML-Auszeichnungssprache aufgebaut ist. In diesem Fall können beispielsweise auch, wie nachfolgend beschrieben, Daten unmittelbar über ein einer dem Formular 10, dem Absender und/oder Empfänger zuordenbaren Meldebehörde zugehöriges Kommunikationssystem abgefragt, ausgetauscht und/oder abgeglichen werden.

Ist das Strukturformular beispielsweise durch eine Baubehörde zur Stellung eines Bauantrages bereitgestellt, kann darüber hinaus der die Inhaltsdaten 12 aufnehmende Bereich z.B. durch die für diesen Bereich zusätzlich hinterlegte XBAU-Auszeichnungssprache beschrieben sein. In einem solchen Fall ist zweckmäßigerweise die Empfängeradresse bereits in dem die Grunddaten 11 umfassenden Bereich durch das Formular 10 vorgegeben.

Nach anwendungsspezifischer Eingabe von Grund- und/oder Inhaltsdaten 11, 12 durch einen Benutzer wird eine entsprechende XML-Konvertierung 13 der Daten mittels einer entsprechenden Computereinrichtung eines senderseitigen Kommunikationssystems 100 bewirkt und anschließend das zu übertragende Strukturformular 10 durch den Benutzer signiert 14.

Die im Formular 1'0 eingebetteten Vorgaben- und/oder Basiseinstellungen 15 können applikationsspezifisch ferner beispielsweise Computer- und/oder Prozessorlesbare Angaben über verwendbare Verzeichnisdienste, XML-Auszeichnungssprachen-spezifische Instruktionen und/oder Schlüssel umfassen, die beispielsweise auch eine jeweils vorgegebene Chiffrierung der Grunddaten 11 und/oder Inhaltsdaten 12 durch das senderseitige Kommunikationssystem 100 bewirken.

Nach Übertragen des Formulars 10 durch das senderseitige Kommunikationssystem 100, insbesondere über das Internet, an die ausgewählte Adresse eines bestimmten Empfangs-Kommunikationssystems 200 werden dort die Signatur ausgelesen und geprüft sowie Grunddaten 11 und/oder Inhaltsdaten 12 zur Weiterbearbeitung zumindest teilweise ausgelesen. Je nachdem, ob die Weiterbearbeitung durch einen Menschen oder eine Maschine erfolgt, wird eine Rückkonvertierung 16 der spezifisch XML-konvertierten Grund- und/oder Inhaltsdaten bewirkt, wobei dies wiederum unter Ansprechen auf die hinterlegten Vorgaben- und/oder Basiseinstellungen 15 erfolgt.

Gemäß einer bevorzugten Anwendung ist im Infrastrukturformular 10 eine Verknüpfung zwischen einem im Grunddaten 11 und/oder Inhaltsdaten 12 umfassenden Bereich ausfüllbaren Feld und einer Empfangsadresse, beispielsweise eines vorbestimmten Agentensystems, aus einem dem Formular hinterlegten Verzeichnisdienst vorgegeben. Wird das Feld durch den Benutzer entsprechend ausgefüllt, kann hierdurch ferner einerseits unmittelbar das Übertragen des Formulars an die Adresse des Agentensystems als Empfangs-Kommunikationssystem 200 bewirkt werden und/oder andererseits unter Ansprechen auf das Auslesen des entsprechenden Feldes durch das Agentensystem der Aufbau eine Kommunikationsverbindung 17 zu dem senderseitigen Kommunikationssystem 100 gemäß den in den Grunddaten 11 enthaltenen Absenderangaben bewirkt werden, um zum Beispiel dem Absender eine Ausfüllhilfe und/oder geführtes, Mensch- und/oder Computer-geführtes, Bearbeiten hinsichtlich des speziellen Formulars bereitzustellen.

Alternativ und/oder ergänzend können jedoch auch derartige Verknüpfungen vorgesehen sein, dass unter Ansprechen auf ausgelesene Grunddaten 11 und/oder Inhaltsdaten 12 das Empfangs-Kommunikationssystem 200 zur Einleitung eines Datenaustauschs und/oder -abgleichs mit einer spezifizierten Datenbank das Formular 10 an ein entsprechendes weiteres Kommunikationssystem 20x, einschließlich eines Verzeichnisdienstes und/oder eines im Internet bereitgestellten personifizierten digitalen Schließfaches weiterleitet, welches beispielsweise nach Übernahme der gewünschten oder notwendigen Daten aus der Datenbank in das Formular 10 dieses dem ursprünglichen Empfangs-Kommunikationssystem 200 wieder zurück überträgt. Ferner ist applikationsspezifisch insbesondere vorgesehen, dass beispielsweise basierend auf den hinterlegten Vorgabeeinstellungen 15 wiederum das Signieren und gegebenenfalls das Verschlüsseln des zu übertragenden Formulars für den Datenaustausch erforderlich ist.

Die Übertragung eines Infrastrukturformulars kann applikationsspezifisch über im Wesentlichen jedes für die digitale Datenübertragung geeignetes Kommunikationsnetz, einschließlich eines Intranets, Extranets und/oder des Internets erfolgen.

Insbesondere auch Gründen des Datenschutzes ist die Nutzung eines spezifischen Formulars, der Zugriff auf Verzeichnisdienste und/oder das Bewirken einer Datenübernahme aus einer Datenbank eines weiteren Kommunikationssystems an bestimmte Anforderungen/Bedingungen gebunden, die auch unmittelbar mit dem verwendeten Infrastrukturformular 10 vorgebbar sind. In praktischer Anwendung ist z.B. das Verwenden einer spezifisch notwendigen Signatur erforderlich oder das vorherige Freischalten einer Datenbank und/oder eines Bürgerschließfaches nach entsprechender Anforderung durch ein Kommunikationssystem bei einem weiteren Kommunikationssystem.

Eine derartige Anforderung kann beispielsweise auch das Senden einer entsprechenden Kurznachricht (SMS) an die in einem Verzeichnisdienst oder bei einer Behörde hinterlegte Adresse einer Benutzerendeinrichtung, wie beispielsweise einem Mobiltelefon, einer die Freigabe bewirkenden Person umfassen, so dass in diesem Fall nach einer Rückübertragung der entsprechend angeforderten, die Freigabe bewirkenden Daten der Zugriff und/oder die Übernahme von bestimmten Daten aus einem personifizierten digitalen Bürgerschließfach durchführbar ist.

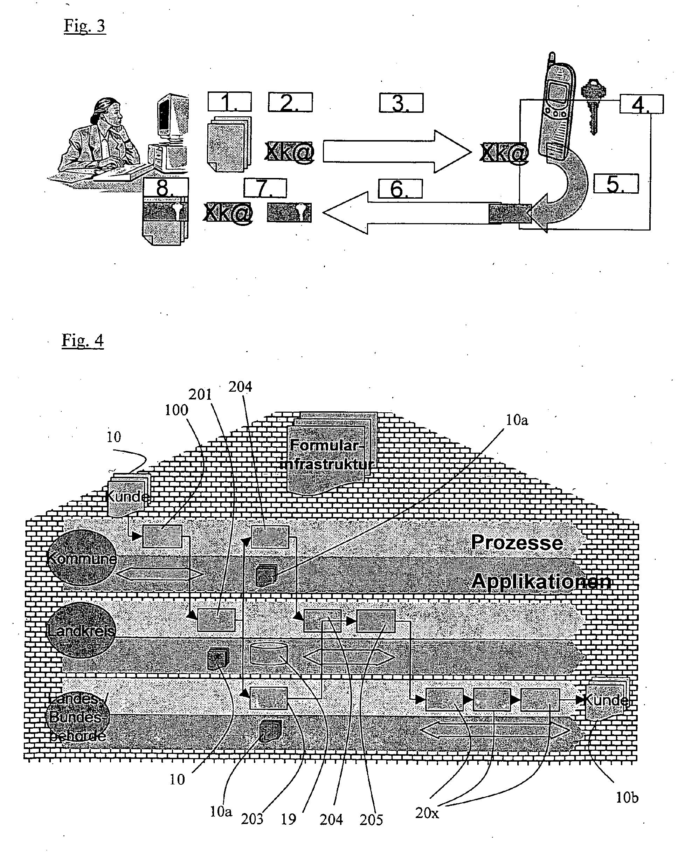

Fig. 3 stellt ein bevorzugtes, jedoch lediglich beispielhaftes Szenario zum Signieren eines Formulars 10 innerhalb der erfindungsgemäßen.Formularinfrastruktur stark vereinfacht dar. Ein solches eignet sich beispielsweise insbesondere bei einer Anwendung der Erfindung für eGovernment-Prozesse und/oder -Applikationen zum flexiblen und mobilen Signieren auf Seiten eines beteiligten Bürgers.

Gemäß Fig. 3 wird in einem ersten, mit Bezugsziffer 1 bezeichneten Schritt von einem Bürger an einem Standard-PC ein PDF-Formular ausgefüllt und in einem zweiten, mit Bezugsziffer 2 bezeichneten Schritt aus dem fertiggestellten Dokument ein Fingerabdruck, beispielsweise ein Hash-Wert nach den aktuellen Standards erstellt. Der PC, beispielsweise ein öffentlich zugänglicher, sendet, wie mit Bezugsziffer 3 bezeichnet, diesen Hash-Wert zum Signieren des Formulars zunächst auf geschützten und/oder ungeschützten Verbindungen, beispielsweise mittels einer SMS, einer E-Mail und/oder durch WAP-Technologie (Wireless Access Protocol) an ein Mobiltelefon 4 des Bürgers. Das Mobiltelefon 4 enthält hierzu eine eingesetzte Mobilfunkkarte, welche den privaten Schlüssel des Bürgers enthält und die erforderlichen Schnittstellen für das Signieren unterstützt. Entsprechend wird der durch das Mobilfunkgerät 4 empfangene Hash-Wert gemäß der Bezugsziffer 5 in Fig. 3 mit Hilfe des gespeicherten privaten Schlüssels signiert. Daraufhin sendet das Mobilfunkgerät den verschlüsselten Hash-Wert an den Absender-PC zurück (Bezugsziffer 6). Mittels des Absender-PC's wird der empfangene, signierte Hash-Wert wieder in einen unverschlüsselten Hash-Wert zurückgewandelt, wie mit Bezugsziffer 3 gekennzeichnet, wozu beispielsweise auf einen im PC abgelegten, dem privaten Schlüssel zuordenbaren öffentlichen Schlüssel zurückgegriffen wird und/oder ein mit dem entsprechenden Infrastrukturformular bereitgestellter öffentlicher Schlüssel ausgelesen und gegebenenfalls verifiziert wird. Anschließend wird das Dokument noch einmal mit dem Schlüssel verglichen, so dass, wenn das zu signierende Dokument und der rückgewandelte Hash-Wert noch im Einklang sind, keine Manipulation auf den ungeschützten Übertragungswegen stattgefunden hat und/oder der Bürger beispielsweise als berechtigter Nutzer verifiziert worden ist. Schließlich wird gemäß Bezugsziffer 8 das zu übertragende Infrastrukturformular mit dem Hash-Wert signiert und an das Kommunikationssystem einer ausgewählten Empfangsadresse versendet.

Die erfindungsgemäße Formularinfrastruktur eignet sich somit insbesondere für eGovernment-Anwendungen, wobei der Kunde oder Bürger gemäß Fig. 4 zweckmäßiger Weise ein aus dem Internet ladbares Infrastrukturformular für eine spezifische Eingabe/Anfrage oder ein von einem z.B. öffentlich bereitgestellten Datenträger auslesbares Infrastrukturformular für eine spezifische Eingabe/Anfrage an eine Kommune bzw. ein dieser zugeordnetes Kommunikationssystem 200 übermittelt. Dieses führt unter Ansprechen auf das Auslesen bestimmter Daten entsprechende Applikationen durch und bewirkt beispielsweise die Weitergabe des Infrastrukturformulars an das Kommunikationssystem 201 einer übergeordneten Behörde. Entsprechend bewirkt das Auslesen spezifischer Daten durch das Kommunikationssystem 201 eine Anforderung und/oder einen Austausch von weiteren spezifischen Daten für das zu bearbeitende Formular 10 und bewirkt unter Einbindung entsprechend über die im Formular 10 hinterlegten Verzeichnisdienste auslesbarer Empfangsadressen das Weiterleiten des Formulars 10 oder abhängiger Formulare 10a an weitere bzw. das Einbinden weiterer Kommunikationssysteme 202, 203 zur Komplettierung weiterer notwendiger Daten für das Infrastrukturformular 10, beispielsweise durch Übernahme der Daten aus einer entsprechend hierfür freigegebenen Datenbank 19. Nach Weiterleitung des Strukturformulare 10a werden die Daten in entsprechenden Systemen 204 und 205 zusammengeführt. Der Kunde erhält schließlich nach Durchlauf sämtlicher beteiligter Behörden und entsprechender Weitergabe zwischen jeweils anwendungsspezifisch zugeordneter Kommunikationssysteme 20x ein modifiziertes oder ein entsprechend der Eingabe gewünschtes neues Infrastrukturformular 10b, beispielsweise zur Billigung oder Bestätigung seines Antrags oder zur Übersendung gewünschter Informationen zurück.

## Patentansprüche

1. Verfahren zum Bereitstellen einer Infrastruktur zum Durchführen von spontanen Any-to-Any Datenübertragungen zwischen wenigstens zwei digitalen Kommunikationssystemen (100, 201, 202, 203, 204, 205, 20x), bei welchem systemübergreifende Vernetzungskomponenten in einer serverunabhängig zusammenwirkenden, digitalen Formularinfrastruktur integriert werden, innerhalb welcher
eine digitale Datei als Infrastrukturfomular (10) eingesetzt wird, wobei
als Datenaustauschformat für das Infrastrukturformular (10) wenigstens eine XML-basierte Auszeichnungssprache verwendet wird und
zur Sicherung des Infrastrukturformulars dieses zumindest unter Verwendung eines senderseitigen Kommunikationssystems (201) vor der Übertragung an wenigstens ein Empfangs-Kommunikationssystem (201, 202, 203, 204, 205, 20x) mit wenigstens einer digitalen Signatur (5, 8) versehen wird,
wobei unter Ansprechen auf das Infrastrukturformular (10) und/oder auf die digitale Signatur (5, 8) das senderseitige Kommunikationssystem (201) zum Zugreifen auf wenigstens einen spezifisch zugeordneten Verzeichnisdienst berechtigt wird oder
unter Ansprechen auf das Infrastrukturformular (10) und/oder einen ausgewählten Verzeichnisdienst das Versehen des zu übertragenden Infrastrukturformulars mit einer spezifisch zugeordneten digitale Signatur (5, 8) angefordert wird.

2. Verfahren nach vorstehendem Anspruch, ferner **dadurch gekennzeichnet, dass** als digitale Datei ein portables Dokumentenformat verwendet wird, insbesondere eine PDF-Datei und/oder eine andere auf einem portablen Dokumentenformat basierte Technologie.

3. Verfahren nach einem der vorstehenden Ansprüche, ferner **dadurch gekennzeichnet, dass** in dem Infrastrukturformular (10) ein Grunddatenbereich (11) zum XML-spezifischen Einbetten und Auslesen von eingebbaren Anwenderbezogenen Grunddaten und ein Inhaltsdatenbereich (12) zum XML-spezifischen Einbetten und Auslesen von eingebbaren Anwendungsbezogenen Inhaltsdaten definiert wird.

4. Verfahren nach vorstehendem Anspruch, ferner **dadurch gekennzeichnet, dass** das Anwenden einer spezifischen XML-Auszeichnungssprache zum Einbetten und/oder Auslesen unter Ansprechen auf wenigstens ein beteiligtes Kommunikationssystem unter Ansprechen und/oder auf das Infrastrukturformular vorgegeben (15) und/oder bewirkt wird.

5. Verfahren nach vorstehendem Anspruch, ferner **dadurch gekennzeichnet, dass** die Grunddaten Anwenderbedingt eingegeben und/oder aus einer Datenbank (19) eines beteiligten Kommunikationssystems (201, 202, 203, 204, 205, 20x), eines Verzeichnisdienstes und/oder eines im Internet bereitgestellten personifizierten digitalen Schließfaches übernommen werden.

6. Verfahren nach einem der vorstehenden Ansprüche, ferner **dadurch gekennzeichnet, dass** unter Ansprechen auf das Auslesen von Grund- und/oder Inhaltsdaten durch das wenigstens eine Empfangs-Kommunikationssystem (201) ein Datenaustausch und/oder -abgleich mit einem weiteren Kommunikationssystem (20x) eingeleitet und/oder durchgeführt wird.

7. Verfahren nach einem der vorstehenden Ansprüche, ferner **dadurch gekennzeichnet, dass** Anwenderbedingt und/oder unter Ansprechen auf das Auslesen von Grund- und/oder Inhaltsdaten durch das wenigstens eine Empfangs-Kommunikationssystem (201) zwischen dem wenigstens einen Empfangs-Kommunikationssystem (201) und dem senderseitigen Kommunikationssystem (100) eine Kommunikationsverbindung (17), insbesondere zur geführten Bearbeitung und/oder Ausfüllhilfe eines Infrastruktürformulars (10) aufgebaut wird.

8. Verfahren nach einem der vorstehenden Ansprüche, ferner **dadurch gekennzeichnet, dass** die Empfangsadresse des wenigstens einen ausgewählten Empfangs-Kommunikationssystems (201) durch das Infrastrukturformular (10) vorgegeben (15) bzw. vorgelegt wird oder nach Zugreifen auf einen Verzeichnisdienst aus diesem ausgewählt wird.

9. Verfahren nach einem der vorstehenden Ansprüche, ferner **dadurch gekennzeichnet, dass** für die digitale Signatur ein Public-Key-Verfahren eingesetzt wird.

10. Verfahren nach einem der vorstehenden Ansprüche, ferner **dadurch gekennzeichnet, dass** von dem zu übertragenden Infrastrukturformular (10) mittels einer Computereinrichtung (2) ein elektronischer Fingerabdruck, insbesondere gemäß einer Hash-Funktion, zum Signieren mit einem geheimen privaten Schlüssel erstellt wird, wobei ein öffentlicher, dem geheimen Schlüssel zugeordneter Schlüssel in der Computereinrichtung gespeichert wird und/oder dem Infrastrukturformular (10) vor der Nutzung durch das senderseitige Kommunikationssystem ein mittels der Computereinrichtung abrufbarer oder auslesbarer öffentlicher Schlüssel im Voraus beigefügt wird.

11. Verfahren nach einem der vorstehenden Ansprüche, ferner **dadurch gekennzeichnet, dass** mittels einer Computereinrichtung des senderseitigen Kommunikatiohssystems (201) von dem zu übertragenden Infrastrukturformular (10) ein elektronischer Fingerabdruck erstellt wird, dieser über wenigstens ein Kommunikationsnetz zum Signieren zu einer Kömmunikationseinrichtung (4), insbesondere einer mobilen Kommunikationsendeinrichtung, innerhalb welcher, insbesondere auf einer in der Kommunikationsendeinrichtung eingesetzten SIM-Karte, ein geheimer, privater Schlüssel abgespeichert ist, übertragen wird, der signierte Fingerabdruck an die Computereinrichtung rückübertragen wird (6), der empfangene signierte elektronische Fingerabdruck mittels einem durch die Computereinrichtung abrufbaren, dem geheimen Schlüssel zugeordneten öffentlichen Schlüssel in einen unverschlüsselten elektronischen Fingerabdruck umgewandelt (7) und mit dem erstellten elektronischen Fingerabdruck verglichen wird und bei Übereinstimmung das zu übertragende Infrastrukturformular (10) mit dem signierten elektronischen Fingerabdruck zum Übertragen an wenigstens ein ausgewähltes Empfangs-Kommunikationssystem (201) versehen wird.

12. Verfahren nach einem der vorstehenden Ansprüche, ferner **dadurch gekennzeichnet, dass** das ausgewählte Empfangs-Kommunikationssystem (201) auf einen dem geheimen Schlüssel zugeordneten öffentlichen Schlüssel zugreifen kann.

13. Verfahren nach einem der vorstehenden Ansprüche, ferner **dadurch gekennzeichnet, dass** zur Durchführung von Transformationen von in das Infrastrukturformular eingebetteten Modulen zwischen verschiedenen Kommunikationssystemen das Kommunikationsprotokoll SOAP innerhalb der Formularinfrastruktur verwendet wird.

14. Verwendung des Verfahrens nach einem der vorstehenden Ansprüche für eGovernment-Prozesse und/oder -Applikationen.

15. Kommunikationssystem, insbesondere zum Durchführen des Verfahrens nach einem der vorstehenden Ansprüche, umfassend:
wenigstens eine zur Nutzung wenigstens eines Kommunikationsnetzes an dieses anschaltbare Computereinrichtung (201) und
Kommunikationsendeinrichtung (4), wobei die Computereinrichtung eine Einrichtung zum Erstellen eines elektronischen Fingerabdrucks aus einer Datei umfasst und
die Kommunikationsendeinrichtung eine Signiervorrichtung zum Signieren eines elektronischen Fingerabdrucks und/oder eine Entschlüsselungsvorrichtung zum Entschlüsseln und Prüfen eines signierten elektronischen Fingerabdrucks umfasst,
und das Kommunikationssystem Schnittstelleneinrichtungen umfasst,
zum Erzeugen, Bearbeiten und/oder Lesen eines Infrastrukturformulars (10), welches auf einem portablen, mit einer digitalen Signatur versehenen Dokumentenformat basiert und für eingebettete und/oder einzubettende Daten eine XML-basierte Auszeichnungssprache als Datenaustauschformat umfasst
sowie
unter Ansprechen auf in dem Infrastrukturformular eingebettete Daten und/oder eine digitale Signatur zum Zugreifen, insbesondere über das Kommunikationsnetz, auf spezifisch zugeordnete Verzeichnisdienste und/oder
unter Ansprechen auf in dem Infrastrukturformular eingebettete Daten und/oder einen ausgewählten Verzeichnisdienst zum Anfordern der Verwendung einer bestimmten digitalen Signatur.

16. Kommunikationssystem nach vorstehendem Anspruch, ferner **dadurch gekennzeichnet, dass** die Computereinrichtung und die Kommunikationsendeinrichtung eine gemeinsame Einheit ausbilden oder separate über wenigstens ein Kommunikationsnetz miteinander kommunizierfähige Einheiten ausbilden.

17. Kommunikationssystem nach einem der vorstehenden Ansprüche, ferner **dadurch gekennzeichnet, dass** die Kommunikationsendeinrichtuhg eine mobile ist, insbesondere ein Mobiltelefon ist, in welcher, insbesondere auf einer der Kommunikationsendeinrichtung zuordenbaren SIM-Karte, wenigstens ein geheimer, privater Schlüssel gespeichert ist.

18. Kommunikationssystem nach einem der vorstehenden Ansprüche, wobei die Computereinrichtung eine Einrichtung zum Auslesen und Verifizieren eines mit dem Infrastrukturformular (10) bereitgestellten öffentlichen Schlüssels umfasst.

19. Kommunikationssystem nach einem der vorstehenden Ansprüche, wobei wenigstens die Computereinrichtung Schnittstellen zur Nutzung des Internets besitzt und eine Vorrichtung, die Anwenderbedingt und/oder unter Ansprechen auf das Auslesen von in das Infrastrukturformular eingebetteten (11, 12, 15) Daten eine Kommunikationsverbindung zu einem weiteren Kommunikationssystem, einem im Internet bereitgestellten personifizierten digitalen Schließfach und/oder einem Verzeichnisdienst für einen Datenaustausch und/oder -abgleich aufbaut.

20. Computer lesbarer Träger mit auslesbaren Daten, die, wenn durch einen Computer ausgelesen, zur Durchführung des Verfahrens nach einem der vorstehenden Ansprüche Verwendung, insbesondere zur Nutzung auf einem Kommunikationssystem nach einem der vorstehenden Ansprüche, ein Infrastrukturformular bereitstellen und/oder eine Formularinfrastruktur bewirken.
